# EUROPÄISCHE PATENTSCHRIFT

(11) **EP 2 729 515 B1**
(45) Veröffentlichungstag und Bekanntmachung des Hinweises auf die Patenterteilung: **14.09.2016**
(21) Anmeldenummer: 12733073.6
(22) Anmeldetag: 02.07.2012
(51) Int. Cl.: C08G 69/18, C08G 69/24

(54) **FESTE PARTIKEL, ENTHALTEND LACTAM, AKTIVATOR UND KATALYSATOR, SOWIE VERFAHREN ZU DEREN HERSTELLUNG UND DEREN VERWENDUNG**
SOLID PARTICLES, CONTAINING LACTAM, ACTIVATOR, AND CATALYST, METHOD FOR PRODUCING SAID SOLID PARTICLES, AND USE OF SAID SOLID PARTICLES
PARTICULES SOLIDES, CONTENANT UN LACTAME, UN ACTIVATEUR ET UN CATALYSEUR, AINSI QUE PROCÉDÉ POUR LA PRODUCTION ET L'UTILISATION DESDITES PARTICULES SOLIDES

(30) Priorität: 05.07.2011 EP 11172731; 09.08.2011 EP 11176950
(43) Veröffentlichungstag der Anmeldung: 14.05.2014
(73) Patentinhaber: BASF SE, 67056 Ludwigshafen am Rhein (DE)
(72) Erfinder: DESBOIS, Philippe, 68535 Edingen-Neckarhausen (DE); BIEDASEK, Silke, 68159 Mannheim (DE); WOLLNY, Andreas, 67251 Freinsheim (DE)
(74) Vertreter: BASF IP Association
(86) Internationale Anmeldenummer: PCT/EP2012/062792
(87) Internationale Veröffentlichungsnummer: WO 2013/004645

(56) Entgegenhaltungen:
- WO-A1-2012/045806
- US-A- 3 325 455
- US-A- 3 567 696
- US-A- 5 837 181

## Beschreibung

Die vorliegende Erfindung betrifft ein Verfahren zur Herstellung fester Partikel, die mindestens ein Lactam sowie mindestens einen Aktivator und mindestens einen Katalysator enthalten,.

Polyamid-Formteile, insbesondere faserverstärkte Polyamidform-Teile, werden in den letzten Jahren vermehrt als Werkstoffe im Ersatz für metallische Werkstoffe beispielsweise im Automobilbau eingesetzt und können sowohl Power train als auch Karosserieteile aus Metall ersetzen. Es ist dabei oftmals vorteilhaft, bei der Herstellung eines Polyamid-Formteils die Form mit einer Monomerschmelze anstatt mit einer Polymerschmelze zu füllen. Aufgrund der niedrigeren Viskosität können z. B. im Falle eines gefüllten oder faserverstärkten Formteils höhere Füllgrade realisiert werden.

Es ist auch vorteilhaft, die Form direkt mit Monomerpulver zu befüllen oder beschichten und dann in situ die Polymerisation zu starten. Auf diese Weise kann im Verarbeitungsprozess auch Energie gespart werden, da in der Regel nur ein Erhitzen auf eine Temperatur oberhalb des Schmelzpunkts des Monomeren erforderlich ist, nicht über den Schmelzpunkt des Polymeren, und im allgemeinen liegt der Schmelzpunkt eines Monomeren niedriger als der Schmelzpunkt eines daraus hergestellten Polymeren.

Das Verfahren zur Herstellung von Polyamid durch aktivierte anionische Lactampolymerisation ist grundsätzlich bekannt.

Lactame, wie beispielsweise Caprolactam, Lauryllactam, Piperidon und Pyrrolidon, aber auch Lactone, wie Caprolacton, können in einer basenkatalysierten anionischen Polymerisationsreaktion ringöffnend polymerisiert werden. Hierzu wird in der Regel eine Schmelze aus Lactam und/oder Lacton enthaltend einen alkalischen Katalysator und einen so genannten Aktivator (auch Co-Katalysator oder Initiator) bei Temperaturen von etwa 150°C polymerisiert.

So beschreibt die DE-A 14 20 241 eine anionische Polymerisation von Lactamen in Gegenwart von Kaliumhydroxid als Katalysator und unter Verwendung von 1,6-Bis-(N,N-dibutylureido)-hexan als Aktivator. Die aktivierte anionische Lactampolymerisation unter Verwendung von Natrium-Caprolactam wird beispielweise in Polyamide, Kunststoff Handbuch, Vol. 3/4, ISBN 3-446-16486-3, 1998, Carl Hanser Verlag, S.49-52 und Macromolecules, Vol. 32, No.23 (1993), S. 7726 beschrieben.

Wie bereits im Stand der Technik beschrieben, kann die anionische Polymerisation von Lactamen und Lactonen in einem Reaktionsformgieß- oder Reaktionsspritzgieß-Prozess erfolgen, wobei der Katalysator und weitere Additive während des Prozesses der Lactam- und/oder Lactonschmelze zugegeben werden.

Da die anionische Polymerisation von Lactamen und Lactonen unter Ausschluss von Sauerstoff, Kohlendioxid und Wasser erfolgen muss, um einen vorzeitigen Abbruch der Polymerisation zu vermeiden, bedeutet die Durchführung einer Polymerisation in einem Reaktionsformgieß- oder Reaktionsspritzgieß-Prozess einen erheblichen technischen Aufwand.

Es ist daher im Hinblick auf die Verfahrensökonomie von Vorteil, wenn für die Herstellung von Polyamid-Formteilen eine Zusammensetzung verwendet werden könnte, welche das Lactam- und/oder Lacton-Monomer, den Katalysator und den Aktivator sowie gegebenenfalls weitere Additive bereits enthält, und welche direkt in der Form oder auf einem Träger, z. B. einem Textilträger, beispielsweise durch Erhöhen der Temperatur polymerisiert werden könnte. Es wäre von Vorteil, dieses aktivierte Lactam (oder Lacton), wie bspw. Caprolactam, direkt als bei Raumtemperatur festes Partikel bzw. Pulver zu bekommen.

Zur Erleichterung von Abfüllung, Transport und Lagerung können aus einer Schmelze einer Komponente, die für die aktivierte anionische Caprolactampolymerisation erforderlich ist, durch Abkühlung Granulat, Schuppen oder Prills hergestellt werden, wobei Prills aufgrund des geringeren Staubanteils und der besseren Fliesseigenschaften Vorteile gegenüber Granulat bzw. Schuppen aufweisen.

Die Herstellung von festen Partikeln, beispielsweise sogenannten Prills, die nur einen Rohstoff für die Herstellung eines Polymeren enthalten, beispielsweise Bisphenol A zur Herstellung eines Polycarbonats, ist bekannt.

DE 199 53 301 A1 beschreibt zudem die Herstellung fester Partikel, die Dihydroxyverbindungen und Kohlensäureester enthalten, sowie die Verwendung dieser Partikel zur Herstellung von Polycarbonat durch Umesterung.

Die Herstellung von Prills kann beispielsweise so erfolgen, dass eine schmelzflüssige Komponente am Kopf eines Prillturmes über eine Düsenplatte mit einer Vielzahl von Düsen in einen Prillturm eingetragen wird, in den im Gegenstrom ein im Kreislauf geführtes Kühlgas eingeleitet wird, wobei die auf etwa Raumtemperatur abgekühlten Prills am Fuß des Prillturmes gesammelt und abgezogen werden.

Der Begriff "Prillturm" bezeichnet einen Apparat, in dem flüssige Komponenten vertropft bzw. versprüht und nachfolgend durch Kühlen verfestigt werden können.

Die getrennte Lagerung und der getrennte Transport der Einsatzstoffe für das Verfahren zur Herstellung von Polyamid durch aktivierte anionische Lactampolymerisation bedeuten einen hohen logistischen Aufwand. Ebenso ist die getrennte Zuführung der beiden Rohstoffe in das Verfahren zur Herstellung von Polyamid durch aktivierte anionische Lactampolymerisation mit einem hohen apparativen Aufwand verbunden.
US 3,567,696 A beschreibt eine lagerbare Polyamid-bildende Zusammensetzung und ein Verfahren zur Polyamidherstellung. Der Partikeldurchmesser der am Ende des Verfahrens erhaltenen Produkte wird jedoch nicht beschrieben.
US 5,837,181 A offenbart thermoplastisch formbare Composit-Materialien basierend auf einer Polyamid 12-Matrix; es wird jedoch kein Sprühverfahren offenbart.
US 3,325,455 A bezieht sich auf ein Verfahren zur Herstellung von Nylon-Pulvern. Das hier dargelegte Sprühverfahren führt allerdings zur direkten Polymerisation des Lactams.

Weiterhin ist es bei der anionischen Lactampolymerisation oftmals sehr aufwändig, die erforderliche Inertatmosphäre herzustellen.

Weiterhin wird die Verarbeitung des Produkts aufgrund der meist hohen Viskosität und Sprödigkeit erschwert.

Es existiert daher die Aufgabe, ein Verfahren zur Herstellung von Polyamid durch aktivierte anionische Lactampolymerisation zur Verfügung zu stellen, das nicht die Nachteile der aus dem Stand der Technik bekannten Verfahren aufweist.

Die Weiterverarbeitung beim Kunden sollte erleichtert werden; zudem sollte eine gute Rieselfähigkeit angestrebt werden.

Eine Aufgabe der vorliegenden Erfindung besteht darin, ein Verfahren zur Herstellung einer bei Raumtemperatur festen Monomer-Zusammensetzung enthaltend Lactame bereit zu stellen, die als solche ohne weitere Zugabe von Katalysatoren und/oder Aktivatoren polymerisiert werden kann.

Zudem existiert die Aufgabe , ein Verfahren zur Herstellung eines Polyamid-Formteils bereitzustellen, welches einfach und kostengünstig unter Verwendung von gängigen, einfachen Formgebungsverfahren durchzuführen ist, und mit dem Polyamid-Formteile von hoher Qualität und mit einem niedrigen Gehalt an Restmonomer erhalten werden können.

Weiterhin war es eine Aufgabe, ein Verfahren zur Herstellung einer bei Raumtemperatur festen Monomer-Zusammensetzung enthaltend Lactame bereit zu stellen, die bei Beschichtungsverfahren, insbesondere Pulverbeschichtungsverfahren, eingesetzt werden kann.

Die erfindungsgemäße Aufgabe wird gelöst durch ein Verfahren wie in den Ansprüchen definiert.

Beschrieben wird auch ein festes Partikel (P), dadurch gekennzeichnet, dass es 50 bis 99,7 Gew.teile, bevorzugt 70 bis 98 Gew.teile, mindestens eines Lactams (L), 0,2 bis 8 Gew.teile, bevorzugt 2,4 bis 5,6 Gew.teile, mindestens eines Aktivators (A) und 0,1 bis 3,6 Gew.teile, bevorzugt 0,65 bis 3 Gew.teile, mindestens eines Katalysators (K) enthält.
Es ist dabei möglich, dass neben den genannten festen Partikeln weitere Rohstoffe für das Verfahren verwendet werden.

Mit dem Begriff "festes Partikel" ist im Rahmen der vorliegenden Offenbarung ein Partikel gemeint, welches bei Raumtemperatur fest ist. Bevorzugt ist das erfindungsgemäße Partikel selbst bei höheren Temperaturen, z. B. bei 50 °C, noch fest.

In einer bevorzugten Ausführungsform ist das mindestens eine Lactam (L) ausgewählt aus der Gruppe enthaltend Caprolactam, Piperidon, Pyrrolidon, Lauryllactam und deren Mischungen, besonders bevorzugt Caprolactam.

Die festen Partikel weisen einen mittleren Durchmesser von 1 bis 2000 µm, vorzugsweise 10 bis 1.000 µm, besonders bevorzugt von 50 bis 500 µm, ganz besonders bevorzugt von 100 bis 200 µm, auf, wobei der Durchmesser durch Lichtstreuung bestimmt werden kann und den volumengemittelten mittleren Durchmesser bedeutet.

Beschrieben wird hier weiterhin die Verwendung fester Partikel (P) zur Herstellung von Polyamid.
1) Gegenstand der vorliegenden Erfindung ist ein Verfahren zur Herstellung fester Partikel (P), wobei das feste Partikel P 50 bis 99,7 Gew.teile mindestens eines Lactams (L), 0,2 bis 8 Gew.teile mindestens eines Aktivators (A) und 0,1 bis 3,6 Gew.teile mindestens eines Katalysators (K) enthält, wobei der mittlere Durchmesser des Partikels im Bereich von 1 bis 2000 µm, vorzugsweise 10 bis 1.000 µm, besonders bevorzugt von 50 bis 500 µm, ganz besonders bevorzugt von 100 bis 200 µm, liegt, wobei der Durchmesser durch Lichtstreuung bestimmt wird und den volumengemittelten mittleren Durchmesser bedeutet , dadurch gekennzeichnet, dass ein Gemisch, das 50 bis 99,7 Gew.-Teile mindestens eines Lactams (L), 2,4 bis 8 Gew.teile mindestens eines Aktivators (A) und 0,54 bis 3,6 Gew.teile mindestens eines Katalysators (K) enthält, abgekühlt wird, wobei das Verfahren die folgenden Schritte umfasst:.
   1a) Vermischen der Komponenten (L), (K) und (A) und ggf. weiterer Komponenten bei einer Temperatur im Bereich vom Schmelzpunkt des höchst schmelzenden im Gemisch enthaltenen Lactam-Monomeren bis 50 °C oberhalb des Schmelzpunkts des höchst schmelzenden im Gemisch enthaltenen Lactam-Monomeren;
   1 b) Überführen des Gemischs in die Tropfenform;
   1c) Abkühlen des unter Schritt b) erhaltenen Tropfens auf eine Temperatur im Bereich von 100 °C unterhalb des Schmelzpunkts des Gemischs bis 10 °C unterhalb des Schmelzpunkts des Gemischs; optional Granulieren der abgekühlten Mischung.

In einer bevorzugten Ausführungsform des erfindungsgemäßen Verfahrens befindet sich der eingesetzte Aktivator und/oder der eingesetzte Katalysator in einer Lösung, beispielsweise in einer Lösung, die auch Lactam, wie z. B. Caprolactam, enthält.

In einer besonders bevorzugten Ausführungsform enthält der Aktivator Hexamethylendiisocyanat (HDI) in Caprolactam, z. B. 80 Gew.% HDI in Caprolactam. Besonders bevorzugt ist auch der Einsatz eines Katalysators umfassend Natriumcaprolactamat in Caprolactam, z. B. 18 Gew.% Natriumcaprolactamat in Caprolactam.

In einer weiteren bevorzugten Ausführungsform umfasst das Verfahren zur Herstellung erfindungsgemäßer fester Partikel (P) die folgenden Schritte:
o kontinuierliches Vermischen, der Komponenten (L), (K) und (A) und ggf. weiterer Komponenten bei einer Temperatur im Bereich vom Schmelzpunkt des höchst schmelzenden im Gemisch enthaltenen Lactam-Monomeren bis 50 °C oberhalb des Schmelzpunkts des höchst schmelzenden im Gemisch enthaltenen Lactam-Monomeren;
o kontinuierliches Überführen, des Gemischs in die Tropfenform;
o Abkühlen des im vorangehenden Schritt erhaltenen Tropfens auf eine Temperatur im Bereich von 100 °C unterhalb des Schmelzpunkts des Gemischs bis 30 °C, unterhalb des Schmelzpunkts des Gemischs;
∘ optional Granulieren der abgekühlten Mischung.

In einer bevorzugten Ausführungsform ist das gesamte erfindungsgemäße Verfahren kontinuierlich.
Beim erfindungsgemäßen Verfahren beträgt der Reaktionsumsatz vor dem Überführen in die Tropfenform bevorzugt zwischen 0 und 50 %, besonders bevorzugt zwischen 0 und 30 %.

Wie im Stand der Technik beschrieben, erfolgt die anionische Polymersation von Lactamen, insbesondere infolge der Zugabe eines Aktivators (zum Beispiel ein Isocyanat, Säurehalogenid oder Säureanhydrid) sehr schnell (Schnellpolymerisation) und schon bei sehr tiefen Temperaturen nahe der Schmelztemperatur des genutzten Lactams.

Es wurde nun überraschenderweise gefunden, dass sich stabile, bei Raumtemperatur feste Monomer-Zusammensetzungen herstellen lassen, welche neben dem Lactam-Monomeren einen Initiator und einen Katalysator enthalten. Diese festen Monomer-Zusammensetzungen polymerisieren nicht unterhalb des Schmelzpunktes des Monomeren und sind somit zunächst gegenüber einer Polymerisation stabil, jedenfalls wenn das Verfahren zur Herstellung fester Partikel (P) so geführt wird, dass das Lactam während des erfindungsgemäßen Verfahrens schnell, z. B. in einer bevorzugten Ausführungsform der Erfindung innerhalb einer Zeitspanne im Bereich von einer Millisekunde bis zu einer Minute, kristallisiert.

Die bei Raumtemperatur festen Monomer-Zusammensetzungen können über mehrere Monate gelagert und zu einem späteren Zeitpunkt für die Polyamidherstellung eingesetzt werden. Die Polymerisation einer solchen Monomerzusammensetzung kann durch Anwendung einfacher Verfahren wie zum Beispiel Spritzguss oder Extrusion, in der Regel bei Temperaturen im Bereich von 100 bis 200°C, erfolgen.

Die beschriebenen bei Raumtemperatur festen Monomer-Zusammensetzungen können einen gewissen Anteil an Polymer enthalten, enthalten jedoch bevorzugt weniger als 50 Gew.% Polymer, bezogen auf die Summe des Gewichts des Polymeren und des Monomeren. Besonders bevorzugt enthalten die beschriebenen bei Raumtemperatur festen Monomer-Zusammensetzungen weniger als 30 Gew.% Polymer, bezogen auf die Summe des Gewichts des Polymeren und des Monomeren.

Die beschriebene bei Raumtemperatur feste Monomerzusammensetzung stellt ein wertvolles Zwischenprodukt dar, welches als solches gelagert, transportiert und gehandelt werden kann, zum Beispiel in Form von Pulver, Granulat oder Kapseln, insbesondere in Form eines Pulvers. Diese fertig gemischte feste Monomerzusammensetzung zeichnet sich durch eine einfache Handhabung aus.
Zudem ist zur Verarbeitung kein aufwändiges Reaktiv-Polymerisationsverfahren umfassend zwei Komponenten, wie zum Beispiel RTM (Reaction Transfer Molding) oder RIM (Reaction Injection Molding), notwendig.

Generell ist es vorteilhaft, Verunreinigungen, wie z.B. Wasser, Kohlendioxid und Sauerstoff, so gering wie möglich zu halten. Daher sollten insbesondere alle eingesetzten Komponenten trocken und frei von Sauerstoff und Kohlendioxid sein. Bevorzugt erfolgt die Vermischung der Ausgangs-Komponenten (und ggf. weiterer Komponenten) unter einer Inertgas-Atmosphäre (z.B. unter Stickstoff). Insbesondere werden die erfindungsgemäßen Verfahrensschritte unter weitgehendem Ausschluss von Sauerstoff, Kohlendioxid und Wasser durchgeführt.

Das Vermischen der Komponenten kann in einem diskontinuierlichen oder kontinuierlichen Verfahren in dem Fachmann bekannten und geeigneten Vorrichtungen erfolgen. Das Vermischen der Komponenten kann beispielsweise kontinuierlich und/oder diskontinuierlich in einem Rührkessel erfolgen. Das Vermischen der Komponenten kann beispielsweise kontinuierlich in einem Extruder erfolgen.

Nach dem Vermischen der Komponenten erfolgt bevorzugt ein möglichst rasches Abkühlen des Gemischs. Insbesondere erfolgt das Abkühlen der erhaltenen Mischung auf eine Temperatur im Bereich von 100 °C unterhalb des Schmelzpunkts des Gemischs bis 10 °C, bevorzugt 30 °C, unterhalb des Schmelzpunkts des Gemischs innerhalb einer Zeitspanne im Bereich von einer Millisekunde bis zehn Minuten, bevorzugt im Bereich von einer Millisekunde bis fünf Minuten, besonders bevorzugt im Bereich von einer Millisekunde bis einer Minute, ganz besonders bevorzugt im Bereich von einer Millisekunde bis zehn Sekunden. Das Abkühlen der der unter Schritt a) erhaltenen Mischung kann insbesondere durch einen kalten Gasstrom (z.B. einem Stickstoffgasstrom von 0 °C) oder ein so genanntes "Cold-Disk-Verfahren" erfolgen.

Als Lactame eignen sich insbesondere Caprolactam, Piperidon, Pyrrolidon, Lauryllactam oder deren Mischungen, bevorzugt Caprolactam, Lauryllactam oder deren Mischungen. Besonders bevorzugt wird als Monomer (M) Caprolactam oder Lauryllactam eingesetzt.

Weiterhin ist es auch möglich, anstelle eines Lactams als Monomer eine Mischung von Lactam und Lacton einzusetzen. Als Lactone können beispielsweise Caprolacton oder Butyrolacton eingesetzt werden. Die Menge an Lacton als Comonomer sollte dabei 40 Gew.-% bezogen auf das Gesamtmonomer nicht überschreiten. Bevorzugt beträgt der Anteil an Lacton als Comonomer nicht mehr als 30 Gew.-%, besonders bevorzugt nicht mehr als 20 Gew.-%, bezogen auf das Gesamtmonomer.

In einer bevorzugten Ausführungsform der Erfindung werden ausschließlich Lactame als Monomere (M) verwendet.

Insbesondere wird als Lactam (L) mindestens ein Monomer eingesetzt ausgewählt aus der Gruppe bestehend aus Caprolactam, Piperidon, Pyrrolidon, Lauryllactam.

In dem erfindungsgemäßen Verfahren wird bevorzugt ein Katalysator (K) eingesetzt, welcher einen gängigen Katalysator für die anionische Polymerisation darstellt. Unter einem Katalysator für die anionische Polymerisation wird im Rahmen der vorliegenden Erfindung eine Verbindung verstanden, welche die Bildung von Lactam-Anionen ermöglicht. Die Lactam-anionen an sich können ebenfalls als Katalysator fungieren.

Derartige Katalysatoren sind beispielsweise aus Polyamide, Kunststoffhandbuch, 1998, Karl Hanser Verlag bekannt. Im Rahmen der vorliegenden Erfindung wird bevorzugt ein Katalysator (K) eingesetzt, der ausgewählt ist aus der Gruppe bestehend aus Natriumcaprolactamat, Kaliumcaprolactamat, Bromid-Magnesiumcaprolactamat, Chlorid-Magnesiumcaprolactamat, Magnesium-bis-Caprolactamat, Natriumhydrid, Natrium, Natriumhydroxid, Natriummethanolat, Natriumethanolat, Natriumpropanolat, Natriumbutanolat, Kaliumhydrid, Kalium, Kaliumhydroxid, Kaliummethanolat, Kaliumethanolat, Kaliumpropanolat, Kaliumbutanolat und deren Mischungen, bevorzugt bestehend aus Natriumcaprolactamat, Kaliumcaprolactamat, Bromid-Magnesiumcaprolactamat, Chloridmagnesiumcaprolactamat, Magnesiumbiscaprolactamat, Natriumhydrid, Natrium, Natriumhydroxid, Natriumethanolat, Natriummethanolat, Natriumpropanolat, Natriumbutanolat, Kaliumhydrid, Kalium, Kaliumhydroxid, Kaliummethanolat, Kaliumethanolat, Kaliumpropanolat, Kaliumbutanolat und deren Mischungen.

Besonders bevorzugt wird ein Katalysator (K) eingesetzt ausgewählt aus der Gruppe bestehend aus Natriumhydrid, Natrium und Natriumcaprolactamat; besonders bevorzugt ist Natriumcaprolactamat und/oder eine Lösung von Natriumcaprolactamat in Caprolactam (z. B. Bruggolen (BASF, DE) C100; 18 Gew.-% Natriumcaprolactamat in Caprolactamat).

Das Molverhältnis von Lactam (L) zu Katalysator (K) kann in weiten Grenzen variiert werden, es beträgt in der Regel 1 : 1 bis 10000 : 1, bevorzugt 5 : 1 bis 1000 : 1, besonders bevorzugt 1 : 1 bis 500 : 1.

In dem bei Raumtemperatur festen Partikel (P), welches gemäß dem erfindungsgemäßen Verfahren hergestellt wird, ist mindestens ein Aktivator (A) für die anionische Polymerisation enthalten.

Unter einem Aktivator (A) für die anionische Polymerisation wird im Rahmen dieser Erfindung ein durch elektrophile Reste N-substituiertes Lactam verstanden (zum Beispiel ein Acyllactam). Als Aktivator können auch Vorstufen für solche aktivierten N-substituierten Lactame verstanden werden, welche zusammen mit dem Lactam (L) in situ ein aktiviertes, Lactam bilden. Die Anzahl der wachsenden Ketten hängt von der Aktivatormenge ab. Als Aktivator (A) eignen sich generell Isocyanate, Säureanhydride und Säurehalogenide bzw. deren Umsetzungsprodukte mit dem Lactammonomer.

Als Aktivatoren (A) eignen sich unter anderem aliphatische Diisocyanate, wie Butylendiisocyanat, Hexamethylendiisocyanat, Octamethylendiisocyanat, Decamethylendiisocyanat, Undodecamethylendiisocyanat, Dodecamethylendiisocyanat, 4,4'-Methylenbis (cyclohexylisocyanat), Isophorondiisocyanat, aromatische Diisocyanate, wie Toluyldiisocyanat, 4,4'-Methylenbis(phenyl)isocyanat oder Polyisocyanate (zum Beispiel Isocyanate von Hexamethylendiisocyanat; Basonat HI 100/BASF SE), Allophanate (zum Beispiel Ethylallophanat). Insbesondere können Mischungen der genannten Verbindung als Aktivator (A) eingesetzt werden.

Als Aktivatoren (A) eignen sich weiterhin aliphatische Disäurehalogenide, wie Butylendisäurechlorid, Butylendisäurebromid, Hexamethylendisäurechlorid, Hexamethylendisäurebromid, Octamethylendisäurechlorid, Octamethylendisäurebromid, Decamethylendisäurechlorid, Decamethylendisäurebromid, Dodecamethylendisäurechlorid, Dodecamethylendisäurebromid, 4,4'-Methylenbis (cyclohexylsäurechlorid), 4,4'-Methylenbis (cyclohexylsäurebromid), Isophorondisäurechlorid, Isophorondisäurebromid; als auch aromatische Disäurehalogenide, wie Toluymethylenldisäurechlorid, Toluylmethylendisäurechlorid, 4,4'-Methylenbis(phenyl)säurechlorid, 4,4'-Methylenbis(phenyl)säurebromid. Insbesondere können Mischungen der genannten Verbindung als Aktivator (A) eingesetzt werden.

Insbesondere bevorzugt ist ein Verfahren, dadurch gekennzeichnet, dass als Aktivator (A) mindestens eine Verbindung eingesetzt wird ausgewählt aus der Gruppe bestehend aus aliphatischen Diisocyanaten, aromatischen Diisocyanaten, Polyisocyanaten, aliphatischen Disäurehalogeniden und aromatischen Disäurehalogeniden.

In einer bevorzugten Ausführungsform wird als Aktivator (A) mindestens eine Verbindung eingesetzt, die ausgewählt ist aus der Gruppe enthaltend Hexamethylendiisocyanat, Isophorondiisocyanat, Hexamethylendisäurebromid, Hexamethylendisäurechlorid und deren Mischungen; besonders bevorzugt wird Hexamethylendiisocyanat eingesetzt.

Das Molverhältnis von Monomer (M) zu Aktivator (A) kann in weiten Grenzen variiert werden und beträgt in der Regel 1 : 1 bis 10000 : 1, bevorzugt 5 : 1 bis 2000 : 1, besonders bevorzugt 20 : 1 bis 1000 : 1.

Die vorliegende Erfindung betrifft auch ein Verfahren wie oben beschrieben, dadurch gekennzeichnet, dass das bei Raumtemperatur feste Partikel (P) mindestens eine weitere Komponente enthält, ausgewählt aus Füll- und/oder Faserstoffen (F), Polymeren (PM) und weiteren Zusatzstoffen (Z). Diese Zugabe dieser zusätzlichen Komponenten können in jedem Schritt des Herstellungsprozesses des festen Partikels (P) erfolgen, beispielsweise vor oder zusammen mit der Zugabe an Katalysator (K) und/oder Aktivator (A).

Das feste Partikel (P) kann ein oder mehrere Polymere (PM) enthalten. Das feste Partikel (P) kann beispielsweise ein Polymer und/oder Oligomer enthalten, welches sich in-situ durch Polymerisation der in der Zusammensetzung enthaltenen Monomeren bildet. Dieses optional enthaltene Polymer (PM) ist beispielsweise in einer Menge von 0 bis 40 Gew.-%, bevorzugt von 0 bis 20 Gew.-%, besonders bevorzugt in einer Menge von 0 bis 10 Gew.-% enthalten.

Darüber hinaus kann das feste Partikel (P) ein oder mehrere Polymere (PM) enthalten, welche in Form eines Polymers zu der Zusammensetzung zugegeben werden. Dieses zugegebene Polymer kann beispielsweise Gruppen enthalten, die zur Bildung von Block- und/oder PfropfCopolymeren mit dem aus dem Lactammonomeren gebildeten Polymeren, geeignet sind. Beispiele für solche Gruppen sind Epoxy-, Amin-, Carboxyl-, Anhydrid-, Oxazolin-, Carbodiimid-, Urethan-, Isocyanat- und Lactam-Gruppen.

Zudem besteht die Möglichkeit, zur Verbesserung der Produkteigenschaften, Verträglichkeiten der Komponenten und Viskosität dem festen Partikel (P) mindestens ein Polymer (PM) zuzugeben, ausgewählt aus der Gruppe bestehend aus Polystyrol, Styrol-Copolymerisate, wie zum Beispiel Styrol-Acrylnitril-Copolymere (SAN), Acrylnitril-Butadien-Styrol-Copolymere (ABS) oder Styrol-Butadien-Copolymere (SB), Polyphenylenoxidether, Polyolefine, wie zum Beispiel Polyethylen (HTPE (high-temperature-polyethylene), LTPE (low-temperature-polyethylene)), Polypropylen oder Polybuten-1, Polytetrafluoroethylen; Polyester, wie zum Beispiel Polyethylenterephthalat (PET) oder Polyamide; Polyether, wie zum Beispiel Polyethylenglykol (PEG), Polypropylenglykol oder Polyethersulfone (PESU oder PES); Polymere aus Vinylgruppen enthalten Monomeren, wie zum Beispiel Polyvinylchlorid, Polyvinylidenchloride, Polystyrol, schlagzähmodifiziertes Polystyrol, Polyvinylcarbazol, Polyvinylacetat, Polyvinylalkohol, Polyisobutylen, Polybutadien, Polysulfon, und Copolymeren der genannten Polymeren.

Das feste Partikel (P) kann zudem ein vernetzendes Monomer enthalten. Ein vernetzendes Monomer kann eine Verbindung darstellen, die mehr als eine Gruppe enthält, welche mit dem Lactammonomer copolymerisiert werden kann. Beispiele für solche Gruppen sind Epoxy-, Amin-, Carboxyl-, Anhydrid-, Oxazolin-, Carbodiimid-, Urethan-, Isocyanat- und Lactan-Gruppen. Als vernetzende Monomere eignen sich beispielsweise aminosubstituierte Lactame wie Aminocaprolactam, Aminopiperidon, Aminopyrrolidon, Aminolauryllactam oder deren Mischungen, bevorzugt Aminocaprolactam, Aminopyrrolidon oder deren Mischungen, besonders bevorzugt Aminocaprolactam.

In einer Ausführungsform enthält das feste Partikel (P) mindestens einen Füll- und/oder Faserstoff (F). Als Füll- und/oder Faserstoff (F) kommen organische oder anorganische Füll- und/oder Faserstoffe (F) in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z.B. Glaskugeln, nanoskalige Füllstoff, wie Kohlenstoff-Nanoröhren, carbon black, nanoskalige Schichtsilikate, nanoskaliges Aluminiumoxid (Al₂O₃), nanoskaliges Titandioxid (TiO₂), Carbo-Nanotubes, Graphen, Schichsilikate und nanoskaliges Siliciumdioxid (SiO₂), eingesetzt werden.

Weiterhin bevorzugt ist der Einsatz von Faserstoffen als Füll- und/oder Faserstoff (F). Hierbei können ein oder mehrere Faserstoffe zum Einsatz kommen, ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, insbesondere Schnittglasfasern, Kohlenstofffasern, Aramidfasern, Borfasern, Metallfasern oder Kaliumtitanatfasern. Die genannten Fasern können in Form von Kurzfasern, Langfasern oder als Gemisch von Kurz- und Langfasern eingesetzt werden. Hierbei weisen die Kurzfasern vorzugsweise eine mittlere Faserlänge im Bereich von 0,1 bis 1 mm auf. Weiterhin bevorzugt sind Fasern mit einer mittleren Faserlänge im Bereich von 0,5 bis 1 mm. Die eingesetzten Langfasern weisen vorzugsweise eine mittlere Faserlänge von über 1 mm, bevorzugt im Bereich von 1 bis 50 mm auf.

Insbesondere können auch Mischungen der genannten Füll- und/oder Faserstoffe (F) eingesetzt werden. Besonders bevorzugt werden als Füll- und/oder Faserstoff (F) Glasfasern und/oder Glaspartikel, insbesondere Glaskugeln, ausgewählt.

Das im oben beschriebene Verfahren hergestellte feste Partikel (P) enthält bevorzugt 30 bis 90 Gew.-%, insbesondere von 30 bis 80 Gew.-%, bevorzugt 30 bis 50 Gew.-%, weiterhin bevorzugt von 50 bis 90 Gew.-% an mindestens einem Füll- und/oder Faserstoff (F).

In einer bevorzugten Ausführungsform kann das feste Partikel (P) weitere Zusatzstoffe (Z) enthalten. Bevorzugt sind die Zusatzstoffe (Z) in einer Menge von 0 bis 5 Gew.-%, bevorzugt von 0 bis 4 Gew.-%, besonders bevorzugt von 0 bis 3,5 Gew.-%. Als Zusatzstoffe (Z) können beispielsweise Stabilisatoren, wie Kupfersalze, Farbstoffe, Antistatika, Trennmittel, Antioxidantien, Lichtstabilisatoren, PVC-Stabilisatoren, Gleitmittel, Flammschutzmittel, Treibmittel, Schlagzähigkeitsverbesserer und Nukleierungsmittel zugesetzt werden.

Bevorzugt enthält das feste Partikel (P) als Zusatzstoff (Z) einen Schlagzähigkeitsverbesserer, insbesondere einen Polydien-Polymer (z.B. Polybutadien, Polyisopren) enthaltend Anhydrid und/oder Epoxigruppen. Das Polydien-Polymer weist insbesondere eine Glasübergangstemperatur unter 0 °C, bevorzugt unter -10 °C, besonders bevorzugt unter -20 °C auf. Das Polydien-Polymer kann auf der Basis eines Polydien-Copolymers mit Polyacrylaten, Polyethylenacrylaten und/oder Polysiloxanen basieren und mittels der gängigen Verfahren hergestellt werden (z.B. Emulsionspolymerisation, Suspensionspolymerisation, Lösungspolymerisation, Gasphasenpolymerisation).

Die Zugabe von Füll- und/oder Faserstoffen (F) und weiteren Zusatzstoffen (Z) kann zu jeden Schritt des Herstellungsprozesses des festen Partikels (P) erfolgen, beispielsweise vor oder zusammen mit der Zugabe an Katalysator (K) und/oder Aktivator (A).

Die vorliegende Erfindung steht darüber hinaus im Zusammenhang mit einem Verfahren zur Herstellung eines Polyamid-Formteils, wobei ein festes Partikel (P), erhältlich durch das oben beschriebene Verfahren, durch Erwärmen auf eine Temperatur von 120 °C bis 250°C polymerisiert wird.

Generell ist es vorteilhaft, Verunreinigungen, wie z.B. Wasser, Kohlendioxid und Sauerstoff, welche zu einem Abbruch der anionischen Polymerisation führen können, so gering wie möglich zu halten. Daher sollten insbesondere alle eingesetzten Komponenten trocken und frei von Sauerstoff und Kohlendioxid sein. Bevorzugt erfolgt die Polymerisation unter weitgehendem Ausschluss von Sauerstoff, Kohlendioxid und Wasser durchgeführt.

Die vorliegende Offenbarung beschreibt auch ein Verfahren zur Herstellung eines Polyamid-Formteils wie oben angegeben umfassend die folgenden Schritte:
- Schmelzen und Sprühen des erfindungsgemäßen festen Partikels (P) bei einer Temperatur von 50 °C bis 160°C; insbesondere von 50 °C bis 150 °C, bevorzugt von 50 °C bis 100 °C;
- Einfüllen des geschmolzenen, ursprünglich festen Partikels (P) in eine Werkzeugkavität oder Applizieren des Pulvers auf ein Textil mittels Imprägnierungsanlage
- Polymerisation des Partikels (P) durch Erwärmen auf eine Temperatur von 120 bis 250°C mittels Spritzgussanlage, Presse, drehende Hohlraumform (Rotomolding), Flammspritzen, Pulverbeschichtung, Wirbelsintern oder Applikation auf Fasern oder Textilien und Aufschmelzen durch Infrarotstrahlung oder Laserstrahlung.

Das Schmelzen des bei Raumtemperatur festen Partikels (P) erfolgt bevorzugt bei einer Temperatur größer oder gleich der Schmelztemperatur des eingesetzten Lactammonomers (L) und unter einer Temperatur von 180 °C, bevorzugt unter 160 °C, besonders bevorzugt unter 120 °C, ganz besonders bevorzugt unter 90 °C.

Der ausgewählte Temperaturbereich in Schritt a) hängt somit von der Auswahl des Lactams (L) bzw. der Lactame (L) ab.

Das geschmolzene Partikel (P) kann mittels eines geeigneten Formgebungsverfahren (z.B. Spritzguss, Gussverfahren, ...) in eine Werkzeugkavität gefüllt und dort durch Erhöhung der Temperatur polymerisiert werden.

Bevorzugt ist ein Verfahren zur Herstellung eines Polyamid-Formteils wie oben angegeben, wobei die Werkzeugkavität mindestens einen Füll- und/oder Faserstoff (F) enthält.

In einer bevorzugten Ausführungsform enthält die Werkzeugkavität ein Fasergewebe und/oder ein Fasernetz, beispielsweise eine Glasfasermatte und/oder ein Glasfasernetz.

Es ist weiterhin möglich einen Füll- und/oder Faserstoff (F) zusammen mit dem geschmolzenen Partikel (P) in die Werkzeugkavität einzufüllen. Dies kann mittels bekannter Verfahren (beispielsweise in einer Spritzgussvorrichtung oder Formgussvorrichtung) erfolgen. Der optional zugegebene Füll- und/oder Faserstoff (F) kann aus den oben im Zusammenhang mit dem erfindungsgemäßen Verfahren zur Herstellung eines festen Partikels (P) genannten Füll- und/oder Faserstoff (F) ausgewählt werden.

Mit Hilfe des beschriebenen Verfahrens ist es möglich, Polyamid-Formteile mit einem hohen Füll- und/oder Faserstoffanteil herzustellen. Insbesondere beschreibt die Offenbarung ein Verfahren wie oben beschrieben, dadurch gekennzeichnet, dass das Polyamid-Formteil einen Füll- und/oder Faserstoffanteil im Bereich von 30 bis 90 Gew.-%, insbesondere von 30 bis 80 Gew.-%, bevorzugt 30 bis 50 Gew.-%, weiterhin bevorzugt von 50 bis 90 Gew.-% aufweist.

Weiterhin beschreibt die vorliegende Erfindung die Verwendung eines bei Raumtemperatur festen Partikels (P), erhältlich durch ein Verfahren wie oben beschrieben, zur Herstellung eines Polyamid-Formteils, insbesondere eines füllstoffhaltigen und/oder faserverstärkten Formteils. Insbesondere weist das Polyamid-Formteil einen Füll- und/oder Faserstoffanteil im Bereich von 30 bis 90 Gew.-% auf.

Die mit dem beschriebenen Verfahren hergestellten Polyamid-Formteile können insbesondere Anwendung finden als Material zur Herstellung von Teilen der Autokarosserie, z.B. Fahrgastzelle, Kotflügel, als auch von Autoteilen, wie Verkleidungen von Rahmen, Armaturenbrettern und für den Innenraum von Fahrgastzellen. Die Polyamid-Formteile können ferner eingesetzt werden als Inliner für Tanks, Zahnräder, Gehäuse, Verpackungsfilme und Beschichtungen.

Prinzipiell eignen sich die mit dem beschriebenen Verfahren hergestellten Polyamid-Formteile für jegliche Gehäuse für elektrische Kleingeräte, wie Mobiltelefone, Laptops, iPads oder allgemein Kunststoffartikel, die Metall imitieren sollen.

Die beschriebenen festen Partikel (P) können zudem unter anderem auch für Lasersintering, Rotomolding, Flammspritzen genutzt werden.

Im erfindungsgemäßen Verfahren zur Herstellung fester Partikel (P) erfolgt die Dosierung und Vermischung der einzelnen Komponenten und somit die Erzeugung des Gemisches kontinuierlich. Dieses führt zu stationären Prozessbedingungen mit konstanten Produkteigenschaften und einer deutlich höheren Standzeit des Prozesses, verglichen mit einem Batch-Prozess.

Erfindungsgemäß werden das mindestens eine Lactam-Monomer (z.B. ε-Caprolactam), mindestens ein Katalysator und mindestens ein Aktivator bevorzugt getrennt voneinander als Schmelze vorgelegt. Alle Komponenten werden kontinuierlich gefördert und vermischt.

Der Katalysator und der Aktivator können jeweils auch als Lösung im Lactam-Monomer vorliegen; wichtig ist jedoch, dass Katalysator und Aktivator getrennt voneinander vorgelegt werden.

In einer Ausführungsform der Erfindung wird zum Lactamstrom zunächst der Aktivator zugemischt, und in dieses Gemisch wird danach der Katalysator eingemischt. Erst mit der Zugabe des Katalysators entsteht ein reaktionsfähiges Gemisch. Dieses wird zum Beispiel durch Versprühen über eine Düse oder über Vertropfen in einen mit kalten Inertgas beschickten Behälter (z. B. Sprühturm) in diskrete Tropen überführt. Während des Fallens der Tropfen im Behälter findet die Erstarrung des Gemisches in Tropfenform statt. Am Austrag werden reaktive Lactampartikel erhalten, die bei Einwirkung von Wärme zu Polyamid auspolymerisieren können.

Die Reihenfolge der Einmischung des Aktivators und des Katalysators kann in einer weiteren Ausführungsform der Erfindung auch umgekehrt erfolgen.

Die Vorlagen und Dosierleitungen sind auf eine Temperatur oberhalb des Schmelzpunkts des verwendeten Lactams (L) temperiert. Die Gastemperatur im Reaktor liegt unterhalb des Schmelzpunkts des Lactams (L).

Über die Verweilzeit zwischen der Einmischstelle, ab der das reaktionsfähige Gemisch vorliegt, und der Düse, sowie der Temperaturführung auf der Verweilzeitstrecke, kann der Reaktionsumsatz vor dem Überführen in die Tropfenform zwischen 0 bis 50 %, bevorzugt 0 bis 30 %, besonders bevorzugt 0 bis 10 %, eingestellt werden.

Die Verfestigung wird in einer bevorzugten Ausführungsform in Apparaten durchgeführt, die auch zur Sprühtrocknung geeignet sind. Derartige Apparate werden beispielsweise in K. Masters, Spray Drying Handbook, 5th Edition, Longman, 1991, S.23-66, beschrieben.

In einer weiteren bevorzugten Ausführungsform werden beim erfindungsgemäßen Verfahren die Schritte des Vermischens, der Überführung des Gemischs in die Tropfenform, und des Abkühlens in einem Prillturm durchgeführt.

Im erfindungsgemäßen Verfahren zur Herstellung fester Partikel (P) können eine oder mehrere Sprühdüsen eingesetzt werden. Die einsetzbaren Sprühdüsen unterliegen keiner Beschränkung. Derartigen Düsen kann die zu versprühende Flüssigkeit unter Druck zugeführt werden. Die Zerteilung der zu versprühenden Flüssigkeit kann dabei dadurch erfolgen, dass sie nach Erreichen einer bestimmten Mindestgeschwindigkeit in der Düsenbohrung entspannt wird. Ferner können für den erfindungsgemäßen Zweck auch Einstoffdüsen, wie beispielsweise Schlitzdüsen oder Drallkammern (Vollkegeldüsen) verwendet werden (beispielsweise von Düsen-Schlick GmbH, DE, oder von Spraying Systems Deutschland GmbH, DE).

Der Durchsatz je Sprühdüse beträgt zweckmäßig 0,1 bis 10 m³/h, häufig 0,5 bis 5 m³/h.

Der Prozess kann auch in Apparaten durchgeführt werden, in denen das reaktionsfähige Gemisch in Form monodisperser Tropfen frei fallen kann. Geeignet dazu sind Apparaturen, wie sie beispielsweise in US 5,269,980 beschrieben sind.

Eine Tropfenerzeugung durch laminaren Strahlzerfall, wie in Rev. Sci. Instr. 38 (1967) 502 beschrieben, ist ebenfalls möglich.

Die Tropfen können aber auch mittels pneumatischer Ziehdüsen, Rotation, Zerschneiden eines Strahls oder schnell ansteuerbarer Mikroventildüsen erzeugt werden.

In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Tropfendurchmesser beeinflusst werden.

Bei der Tropfenerzeugung durch Rotation tritt die Flüssigkeit durch die Öffnungen einer rotierenden Scheibe. Durch die auf die Flüssigkeit wirkende Fliehkraft werden Tropfen definierter Größe abgerissen. Bevorzugte Vorrichtungen zur Rotationsvertropfung werden beispielsweise in DE 43 08 842 A1 beschrieben.

Der austretende Flüssigkeitsstrahl kann aber auch mittels eines rotierenden Messers in definierte Segmente zerschnitten werden. Jedes Segment bildet anschließend einen Tropfen.

Bei Verwendung von Mikroventildüsen werden direkt Tropfen mit definiertem Flüssigkeitsvolumen erzeugt.

Die erzeugten diskreten Tropfen weisen in der Regel einen mittleren Durchmesser von 1 bis 2000 µm, vorzugsweise 10 bis 1.000 µm, besonders bevorzugt von 50 bis 500 µm, ganz besonders bevorzugt von 100 bis 200 µm, auf, wobei der Tropfendurchmesser durch Lichtstreuung bestimmt werden kann und den volumengemittelten mittleren Durchmesser bedeutet.

Der Behälter kann von einem Gas durchströmt werden. Dabei kann das Trägergas im Gleichstrom oder im Gegenstrom zu den frei fallenden Tropfen des Monomergemischs durch den Reaktionsraum geführt werden, bevorzugt im Gleichstrom, d.h. von oben nach unten. Vorzugsweise wird das Gas nach einem Durchgang zumindest teilweise, bevorzugt zu mindestens 50 %, besonders bevorzugt zu mindestens 75 %, als Kreisgas in den Reaktionsraum zurückgeführt. Üblicherweise wird eine Teilmenge des Trägergases nach jedem Durchgang ausgeschleust, vorzugsweise bis zu 10 %, besonders bevorzugt bis zu 3 %, ganz besonders bevorzugt bis zu 1 %.

Der Sauerstoffgehalt des Trägergases beträgt vorzugsweise maximal 15 Vol.-%, besonders bevorzugt maximal 5 Vol.-%, ganz besonders bevorzugt maximal 0,1 Vol.-%.

Das Trägergas enthält neben Sauerstoff vorzugsweise ein Inertgas, besonders bevorzugt Stickstoff. Der Inertgasgehalt des Trägergases beträgt vorzugsweise mindestens 80 Vol.-%, besonders bevorzugt mindestens 90 Vol.-%, ganz besonders bevorzugt mindestens 95 Vol.-%.

Die Gasgeschwindigkeit wird vorzugsweise so eingestellt, dass die Strömung im Reaktor gerichtet ist, beispielsweise liegen keine der allgemeinen Strömungsrichtung entgegen gesetzte Konvektionswirbel vor, und beträgt beispielsweise 0,01 bis 5 m/s, vorzugsweise 0,02 bis 4 m/s, besonders bevorzugt 0,05 bis 3 m/s, ganz besonders bevorzugt 0,1 bis 2 m/s.

Die Reaktion kann im Überdruck oder im Unterdruck durchgeführt werden, ein Überdruck von bis zu 100 mbar gegenüber dem Umgebungsdruck ist bevorzugt.

Das beschriebene Verfahren zur Herstellung von Polyamid durch anionische Lactampolymerisation hat zahlreiche Vorteile. Es erlaubt eine vereinfachte Rohstofflogistik, insbesondere eine vereinfachte Lagerung und einen vereinfachten Transport der Rohstoffe. Die Zuführung der Rohstoffe in das Verfahren ist vereinfacht.

Das beschriebene Verfahren zur Herstellung von Polyamid durch aktivierte anionische Lactampolymerisation unter Verwendung der beschriebenen festen Partikel als Rohstoff zeichnet sich durch logistische Vorteile auf, wie z. B. einfache Lagerung der Rohstoffe, einfacher Transport der Rohstoffe und einfache Zuführung der Rohstoffe in das Verfahren.

Das beschriebene Verfahren zur Herstellung von Polyamid durch aktivierte anionische Lactampolymerisation unter Verwendung der beschriebenen festen Partikel als Rohstoff ist weiterhin durch den Vorteil gekennzeichnet, dass eine exakte Einstellung des stöchiometrischen Verhältnisses zwischen Lactammonomeren und Aktivator bzw. Katalysator schon in den Prills möglich ist.

Die beschriebenen, bei Raumtemperatur festen Partikel aus Lactammonomer, Katalysator und Aktivator haben zahlreiche Vorteile. Sie sind mechanisch stabil. Sie können gelagert werden, ohne dass sie chemisch reagieren oder sich verfärben. Die erfindungsgemäßen festen Partikel zeichnen sich aus durch hohe Farbstabilität und hohe Lagerstabilität sowie durch eine hohe Reinheit.

Das erfindungsgemäße Verfahren zur Herstellung fester Partikel, die Lactam, Aktivator und Katalysator enthalten, hat zahlreiche Vorteile. Es liefert auf einfache Weise mechanisch stabile, lagefähige und farbhelle feste Partikel der angegebenen Zusammensetzung. Gegenüber der getrennten Konfektionierung von Lactam, Aktivator und Katalysator werden weniger Apparaturen benötigt.

Die beschriebenen festen Partikel können beliebige Größe und Gestalt haben. Bevorzugt haben sie kugelförmige oder nahezu kugelförmige Gestalt (sogenannte Prills). Sie können jedoch auch die Gestalt von Pulverpartikeln, Schuppen oder sogenannten Pellets haben.

Das erfindungsgemäße Verfahren zur Herstellung fester Partikel, die Lactam, Katalysator und Aktivator enthalten, ist dadurch gekennzeichnet, dass ein Gemisch, das mindestens ein Lactam, mindestens einen Katalysator und mindestens einen Aktivator enthält, abgekühlt und dadurch verfestigt wird. Bevorzugt wird dieses Verfahren in einer Ausführungsform als sogenanntes Prillverfahren ausgeführt, d. h. dass das Gemisch in der Gasphase dispergiert wird, beispielsweise in Form von kugelförmigen Schmelzepartikeln, die dann in der Gasphase im freien Fall abkühlen und sich verfestigen. Die Verfestigung bedeutet bevorzugt eine Kristallisation. Sie kann jedoch auch im Allgemeinen eine Kristallisation oder ein glasartiges Erstarren, das einen amorphen Zustand der festen Partikel zur Folge hat, bedeuten.

Die geschilderte, bevorzugte erfindungsgemäße Ausführung des Verfahrens zur Herstellung fester Partikel über das Prillverfahren, hat den Vorteil, dass das Prillverfahren eine kurze Verweilzeit der vereinigten Stoffströme aus Lactam, Katalysator und Aktivator im Gemisch erlaubt. Dies ist dadurch gewährleistet, dass das vereinigte Gemisch aus Lactam, Katalysator und Aktivator im Prillverfahren schnell abgekühlt und verfestigt werden kann. Dies hat den Vorteil zur Folge, dass die Einzelkomponenten Lactam, Katalysator und Aktivator nicht oder nicht vollständig im Gemisch miteinander reagieren, so dass der Umsatz in den Partikeln gesteuert werden kann. Der genannte Vorteil zeichnet das Prillverfahren gegenüber anderen Verfahren zur Verfestigung eines Gemischs, beispielsweise Verfahren zur Herstellung von Granulaten oder Schuppen aus.

Demgemäß ist es eine besonders bevorzugte Ausführungsform des erfindungsgemäßen Verfahrens zur Herstellung fester Partikel, wenn das Verfahren als Prillverfahren ausgeführt wird und, wenn das Verfahren nur kurze Verweilzeiten des vereinigten Gemischs aus Lactam, Katalysator und Aktivator aufweist, und wenn das vereinigte Gemisch aus Lactam, Katalysator und Aktivator eine Temperatur aufweist, die nur geringfügig oberhalb des Verfestigungspunktes diese Gemischs ist.

Die Verweilzeit des vereinigten Gemischs aus Lactam, Katalysator und Aktivator ist bevorzugt kleiner als 60 Sekunden, besonders bevorzugt kleiner als 30 Sekunden und ganz besonders bevorzugt kleiner als 10 Sekunden. Die Temperatur des vereinigten Gemischs aus Lactam, Katalysator und Aktivator ist bevorzugt weniger als 20 ° C oberhalb des Verfestigungspunktes dieses Gemischs, sie ist besonders bevorzugt weniger als 5 ° C oberhalb des Verfestigungspunktes und ganz besonders bevorzugt weniger als 1 ° C oberhalb des Verfestigungspunktes dieses Gemischs.

Eine besonders bevorzugte Ausführungsform des erfindungsgemäßen Verfahrens ist es demgemäß, die getrennten Schmelzen aus Lactam, Katalysator und Aktivator jeweils separat bei einer Temperatur knapp oberhalb ihres Schmelzpunktes bereitzustellen, sie danach zu mischen, sie danach auf eine Temperatur knapp oberhalb des Verfestigungspunktes der gemischten Schmelze abzukühlen, und sie danach in einem Prillverfahren zu verfestigen, wobei das gesamte Verfahren so geführt wird, dass die Verweilzeit der vereinigten Schmelze aus Lactam, Katalysator und Aktivator in der flüssigen Phase, d. h. bis zur Verfestigung durch Prillherstellung möglichst gering gehalten wird.

Eine ebenso bevorzugte Ausführungsform des erfindungsgemäßen Verfahrens zur Herstellung der festen Partikel ist die Verfestigung der Schmelze, die Lactam, Katalysator und Aktivator enthält, zu Granulaten oder Schuppen nach bekannten Verfahren.

Eine ebenso bevorzugte Ausführungsform des erfindungsgemäßen Verfahrens zur Herstellung der festen Partikel ist die Pelletierung einer Schmelze, die Lactam, Katalysator und Aktivator enthält, nach bekannten Pelletierverfahren.

In einer bevorzugten Ausführungsform bestehen die festen Partikel aus mindestens einem Lactam, mindestens einem Aktivator und mindestens einem Katalysator, ohne dass sie weitere Substanzen enthalten. Dabei ist es selbstverständlich dem Fachmann bekannt, dass Verunreinigungen in geringfügigen Mengen nach wie vor in den festen Partikeln enthalten sein können. Diese sind somit nicht mit der Formulierung weitere Substanzen gemeint, gemeint ist lediglich, dass nicht weitere Substanzen willentlich in nennenswertem Umfang in den festen Partikel enthalten sind; worunter z. B. Stellmittel, Füllstoffe oder beliebige weitere Substanzen gemeint sein könnten.

Die Erfindung wird durch die nachfolgenden Beispiele näher erläutert. Diese Beispiele illustrieren einige Aspekte der vorliegenden Erfindung und sind keinesfalls als einschränkend für den Schutzumfang dieser Erfindung anzusehen.

### Beispiel 1

ε-Caprolactam wird bei 85 °C mit einer Förderrate von 8,44 kg/h kontinuierlich mit einer Lösung bestehend aus 95,2 Gewichtsprozent ε-Caprolactam und 4,8 Gewichtsprozent Natriumcaprolactamat, die mit einer Förderrate von 4,25 kg/h zugegeben wird, in einem statischen Mischer kontinuierlich vermischt. Diese Mischung wird auf 80 °C temperiert. Nach kontinuierlicher Zugabe von 0,55 kg/h einer Lösung bestehend aus 80 Gewichtsprozent N,N'-Hexamethylen-bis-(carbamoyl-ε-caprolactam) und 20 Gewichtsprozent Caprolactam wird die entstandene Mischung in einen mit Stickstoff inertisierten Sprühturm (auch Prillturm genannt) mittels Zweistoffdüse versprüht. Die Temperatur der Gasphase im Sprühturm beträgt 25 °C. Es werden Partikel mit einer durchschnittlichen Partikelgröße von 160 µm erhalten.

Eine Woche später wird das so erhaltene Pulver bei einer Produkttemperatur von 80°C spritzgegossen in einer Spritzgussmaschine, Arburg 270 S mit vertikaler Spritzeinheit. Das Temperaturprofil des Zylinders war 60/65/70/75°C, Einspritzzeit 0,8 s, Nachdruckzeit 2 s. Die Schmelze wird in eine auf 150 °C erhitzte Form injiziert. Danach wird die Polymerisation 5 Minuten fortschreiten gelassen. Das erhaltene Polyamid-Formteil wird aus dem Werkzeug entnommen.

Der Gehalt an Restmonomer (Caprolactam) des Polyamid-Produktes wird chromatographisch bestimmt. Die Viskositätzahl des Polyamid-Produktes wird gemäß der ISO 307 bei 5 °C in 96 %iger Schwefelsäure bestimmt. Das erhaltene Polymer enthält 1,1 Gew.-% Rest Caprolactam und weist eine Viskositätszahl von 320 auf.

### Beispiel 2

Die gemäß Beispiel 1 hergestellte feste Monomerzusammensetzung wird einen Monat gelagert. Danach wird die Polymerisation wie in Beispiel 1 beschrieben ausgeführt. Das erhaltene Polyamid enthält einen Restmonomergehalt von 1,15 Gew.-% Caprolactam und weist eine Viskositätszahl von 305 auf.

Es kann somit gezeigt werden, dass die mittels des erfindungsgemäßen Verfahrens hergestellten Monomer-Zusammensetzungen über einen langen Zeitraum stabil sind, d.h. auch nach einer langen Zeit noch vollständig polymerisiert werden können.

### Beispiel 3

ε-Caprolactam wird bei 85 °C mit einer Förderrate von 8,44 kg/h kontinuierlich mit einer Lösung bestehend aus 95,2 Gewichtsprozent ε-Caprolactam und 4,8 Gewichtsprozent Natriumcaprolactamat, die mit einer Förderrate von 4,25 kg/h zugegeben wird, in einem statischen Mischer kontinuierlich vermischt. Diese Mischung wird auf 80 °C temperiert. Nach kontinuierlicher Zugabe von 0,55 kg/h einer Lösung bestehend aus 80 Gewichtsprozent N,N'-Hexamethylen-bis-(carbamoyl-ε-caprolactam) und 20 Gewichtsprozent Caprolactam wird die entstandene Mischung in einen mit Stickstoff inertisierten Sprühturm mittels Zweistoffdüse versprüht. Die Temperatur der Gasphase im Sprühturm beträgt 30 °C. Es werden Partikel mit einer durchschnittlichen Partikelgröße von 160 µm erhalten.

Eine Woche später wird das so erhaltene Caprolactam-Pulver bei einer Produkttemperatur von 80°C spritzgegossen in einer Spritzgussmaschine, Arburg 270 S mit vertikaler Spritzeinheit. Das Temperaturprofil des Zylinders war 60/65/70/75°C, Einspritzzeit 0,8 s, Nachdruckzeit 2 s. Die Schmelze wird in eine auf 150 °C erhitzte Form injiziert. Danach wird die Polymerisation 5 Minuten fortschreiten gelassen. Das erhaltene Polyamid-Formteil wird aus dem Werkzeug entnommen.

Der Gehalt an Restmonomer (Caprolactam) des Polyamid-Produktes wird chromatographisch bestimmt. Die Viskositätzahl des Polyamid-Produktes wird gemäß der ISO 307 bei 5 °C in 96 %iger Schwefelsäure bestimmt. Das erhaltene Polymer enthält 1,1 Gew.-% Rest Caprolactam und weist eine Viskositätszahl von 320 auf.

### Beispiel 4

ε-Caprolactam wird bei 85 °C mit einer Förderrate von 8,44 kg/h kontinuierlich mit einer Lösung bestehend aus 95,2 Gewichtsprozent ε-Caprolactam und 4,8 Gewichtsprozent Natriumcaprolactamat, die mit einer Förderrate von 4,25 kg/h zugegeben wird, in einem statischen Mischer kontinuierlich vermischt. Diese Mischung wird auf 80 °C temperiert. Nach kontinuierlicher Zugabe von 0,55 kg/h einer Lösung bestehend aus 80 Gewichtsprozent N,N'-Hexamethylen-bis-(carbamoyl-ε-caprolactam) und 20 Gewichtsprozent Caprolactam wird die entstandene Mischung in einen mit Stickstoff inertisierten Sprühturm mittels Zweistoffdüse versprüht. Die Temperatur der Gasphase im Sprühturm beträgt 25 °C. Es werden Caprolactampartikel mit einer durchschnittlichen Partikelgröße von 160 µm erhalten.

Eine Woche später wird das so erhaltene Caprolactam-Pulver bei einer Produkttemperatur von 23°C auf eine Glasfasermatte appliziert, 50% Vol Anteil. Das Composit wird mittels einer Doppelbandepresse bei 150°C gepresst, wobei die Verweilzeitzeit des Kompostes in der Presse bei 3 Min liegt. Das erhaltene Polyamid-Formteil wurde aus dem Werkzeug entnommen.

Der Gehalt an Restmonomer (Caprolactam) des Polyamid-Produktes wurde chromatographisch bestimmt. Die Viskositätzahl des Polyamid-Produktes wurde gemäß der ISO 307 bei 5 °C in 96 %iger Schwefelsäure bestimmt. Das erhaltene Polymer enthielt 1,3 Gew.-% Rest Caprolactam und wies eine Viskositätszahl von 290 auf.

## Patentansprüche

1. Verfahren zur Herstellung fester Partikel (P), wobei das feste Partikel P 50 bis 99,7 Gew.teile mindestens eines Lactams (L), 0,2 bis 8 Gew.teile mindestens eines Aktivators (A) und 0,1 bis 3,6 Gew.teile mindestens eines Katalysators (K) enthält, wobei der mittlere Durchmesser des Partikels im Bereich von 1 bis 2000 µm, vorzugsweise 10 bis 1.000 µm, besonders bevorzugt von 50 bis 500 µm, ganz besonders bevorzugt von 100 bis 200 µm, liegt, wobei der Durchmesser durch Lichtstreuung bestimmt wird und den volumengemittelten mittleren Durchmesser bedeutet , **dadurch gekennzeichnet, dass** ein Gemisch, das 50 bis 99,7 Gew.-Teile mindestens eines Lactams (L), 2,4 bis 8 Gew.teile mindestens eines Aktivators (A) und 0,54 bis 3,6 Gew.teile mindestens eines Katalysators (K) enthält, abgekühlt wird, wobei das Verfahren die folgenden Schritte umfasst:.
1a) Vermischen der Komponenten (L), (K) und (A) und ggf. weiterer Komponenten bei einer Temperatur im Bereich vom Schmelzpunkt des höchst schmelzenden im Gemisch enthaltenen Lactam-Monomeren bis 50 °C oberhalb des Schmelzpunkts des höchst schmelzenden im Gemisch enthaltenen Lactam-Monomeren;
1b) Überführen des Gemischs in die Tropfenform;
1c) Abkühlen des unter Schritt b) erhaltenen Tropfens auf eine Temperatur im Bereich von 100 °C unterhalb des Schmelzpunkts des Gemischs bis 10 °C unterhalb des Schmelzpunkts des Gemischs;
1d) optional Granulieren der abgekühlten Mischung.

2. Verfahren zur Herstellung fester Partikel (P) gemäß Anspruch 1, wobei der Reaktionsumsatz vor dem Überführen in die Tropfenform zwischen 0 und 50 % beträgt.

3. Verfahren zur Herstellung fester Partikel (P) gemäß einem der Ansprüche 1 bis 2, wobei das Abkühlen in Schritt (c) innerhalb einer Zeitspanne im Bereich von einer Millisekunde bis zehn Minuten erfolgt.

4. Verfahren zur Herstellung fester Partikel (P) gemäß einem der Ansprüche 1 bis 62, wobei das Abkühlen in Schritt (c) innerhalb einer Zeitspanne im Bereich von einer Millisekunde bis einer Minute erfolgt.

## Claims

1. A process for the production of solid particles (P), where the solid particle P comprises from 50 to 99.7 parts by weight of at least one lactam (L), from 0.2 to 8 parts by weight of at least one activator (A), and from 0.1 to 3.6 parts by weight of at least one catalyst (K), where the average diameter of the particle is in the range from 1 to 2000 µm, preferably from 10 to 1000 µm, particularly preferably from 50 to 500 µm, very particularly preferably from 100 to 200 µm, where the diameter is determined via light scattering and means the volume-average diameter, which comprises cooling a mixture which comprises from 50 to 99.7 parts by weight of at least one lactam (L), from 2.4 to 8 parts by weight of at least one activator (A), and from 0.54 to 3.6 parts by weight of at least one catalyst (K), where the process comprises the following steps:
1a. mixing of components (L), (K), and (A), and optionally of further components, at a temperature in the range from the melting point of the highest-melting-point lactam monomer comprised in the mixture to 50°C above the melting point of the highest-melting-point lactam monomer comprised in the mixture;
1b. conversion of the mixture to droplet form;
1c. cooling of the droplet obtained in step b) to a temperature in the range from 100°C below the melting point of the mixture to 10°C below the melting point of the mixture;
1d. optional granulation of the cooled mixture.

2. The process for the production of solid particles (P) according to claim 1, where the conversion in the reaction prior to the conversion to droplet form is from 0 to 50%.

3. The process for the production of solid particles (P) according to claim 1 or 2, where the cooling in step (c) takes place within a period in the range from one millisecond to ten minutes.

4. The process for the production of solid particles (P) according to any of claims 1 to 62, where the cooling in step (c) takes place within a period in the range from one millisecond to one minute.

## Revendications

1. Procédé de fabrication de particules solides (P), la particule solide P contenant 50 à 99,7 parties en poids d'au moins un lactame (L), 0,2 à 8 parties en poids d'au moins un activateur (A) et 0,1 à 3,6 parties en poids d'au moins un catalyseur (K), le diamètre moyen de la particule se situant dans la plage allant de 1 à 2 000 µm, de préférence de 10 à 1 000 µm, de manière particulièrement préférée de 50 à 500 µm, de manière tout particulièrement préférée de 100 à 200 µm, le diamètre étant déterminé par diffusion de lumière et signifiant le diamètre moyen moyenné en volume, **caractérisé en ce qu'**un mélange, qui contient 50 à 99,7 parties en poids d'au moins un lactame (L), 2,4 à 8 parties en poids d'au moins un activateur (A) et 0,54 à 3,6 parties en poids d'au moins un catalyseur (K), est refroidi, le procédé comprenant les étapes suivantes :
1a) le mélange des composants (L), (K) et (A) et éventuellement de composants supplémentaires à une température dans la plage allant du point de fusion du monomère lactame contenu dans le mélange ayant le point de fusion le plus élevé à 50 °C au-dessus du point de fusion du monomère lactame contenu dans le mélange ayant le point de fusion le plus élevé ;
1b) le transfert du mélange sous la forme de gouttes ;
1c) le refroidissement des gouttes obtenues à l'étape b) à une température dans la plage allant de 100 °C en dessous du point de fusion du mélange à 10 °C en dessous du point de fusion du mélange ;
1d) éventuellement la granulation du mélange refroidi.

2. Procédé de fabrication de particules solides (P) selon la revendication 1, dans lequel la conversion de la réaction avant le transfert sous forme de gouttes est comprise entre 0 et 50 %.

3. Procédé de fabrication de particules solides (P) selon l'une quelconque des revendications 1 à 2, dans lequel le refroidissement à l'étape (c) a lieu en une durée dans la plage allant d'une milliseconde à dix minutes.

4. Procédé de fabrication de particules solides (P) selon l'une quelconque des revendications 1 à 62, dans lequel le refroidissement à l'étape (c) a lieu en une durée dans la plage allant d'une milliseconde à une minute.
